Europäisches Patentamt

European Patent Office

Office européen des brevets

(11) Numéro de publication: **0 431 992 A1**

# (12) DEMANDE DE BREVET EUROPEEN

(21) Numéro de dépôt: 90403096.2

(51) Int. Cl.5: **F16B 2/24**, F16B 5/06

(22) Date de dépôt: **31.10.90**

(30) Priorité: **03.11.89 FR 8914450**

(43) Date de publication de la demande:
**12.06.91 Bulletin 91/24**

(84) Etats contractants désignés:
**AT BE CH DE DK ES GB GR IT LI LU NL SE**

(71) Demandeur: **TECHNAL S.A.**
**270, rue Léon Joulin**
**F-31037 Toulouse Cedex(FR)**

(72) Inventeur: **Massol, Michel**
**2 Rue Léon Soulie**
**F-31400 Toulouse(FR)**

(74) Mandataire: **Grosset-Fournier, Chantal**
**Catherine et al**
**ERNEST GUTMANN-YVES PLASSERAUD S.A.,**
**67 boulevard Haussmann**
**F-75008 Paris(FR)**

(54) **Clip de liaison, notamment pour l'assemblage de deux profiles.**

(57) Clip de liaison pour l'assemblage de deux profilés, propre à être immobilisé par pression sur l'un de ces profilés (1) et à maintenir l'autre (16) en appui direct sur le premier.

Selon l'invention, ce clip se caractérise en ce qu'il est constitué par une pièce de liaison métallique (9) en forme de S, à partie médiane (10) sensiblement plane dont l'une des extrémités (11) partiellement rabattue forme une boucle ouverte destinée à recevoir et immobiliser le second profilé, cette boucle s'appliquant sur le dessus d'un rebord d'accrochage (5) ménagé sur le premier profilé et sous lequel s'engagent des crochets (15) solidaires de la pièce de liaison en s'étendant à partir de la face de celle-ci opposée à la boucle ouverte, l'autre extrémité (12) de la pièce étant également repliée du côté des crochets et adaptée à venir se loger à force contre un flan d'appui (6) du profilé (1), parallèle au rebord d'accrochage.

FIG. 4

EP 0 431 992 A1

La présente invention est relative à un clip de liaison, notamment pour assurer la jonction entre deux profilés métalliques, ou encore entre un profilé et une pièce rapportée et maintenue contre celui-ci, du genre par exemple d'une parclose de protection ou de décoration ou d'un autre élément analogue de support ou de présentation d'un accessoire à appliquer contre le profilé.

On a déjà réalisé, en particulier dans les systèmes d'assemblage de profilés mis en oeuvre dans la technique des menuiseries métalliques, des montages à clips de liaison pour assurer le blocage mutuel de deux profilés ou pièces analogues, ces clips étant usuellement montés à coulissement dans une rainure de l'un des profilés et venant se serrer ou s'expanser élastiquement dans une rainure homologue de l'autre profilé ou de la pièce à appliquer et à immobiliser contre le premier. Toutefois, dans les solutions connues, les clips utilisés sont montés avec des jeux qui ne permettent pas un blocage efficace des deux pièces et également ne sont pas toujours susceptibles d'être entièrement cachés à l'intérieur des profilés, rendant leur assemblage peu esthétique et limitant dès lors leurs applications.

La présente invention a pour objet un clip de liaison qui évite ces inconvénients, en permettant un serrage mutuel efficace de deux profilés métalliques ou d'un profilé et d'une pièce de forme rapportée sur celui-ci en ménageant entre eux un angle quelconque, la jonction réalisée étant sûre, sans jeu, facile à mettre en place et étant invisible de l'extérieur une fois les deux profilés réunis.

Selon l'invention, le clip pour l'assemblage de deux profilés, propre à être immobilisé par pression sur l'un de ces profilés et à maintenir l'autre en appui direct sur le premier, se caractérise en ce qu'il est constitué par une pièce de liaison métallique en forme de S, à partie médiane sensiblement plane, dont l'une des extrémités partiellement rabattue forme une boucle ouverte destinée à recevoir et immobiliser le second profilé, cette boucle s'appliquant sur le dessus d'un rebord d'accrochage ménagé sur le premier profilé et sous lequel s'engagent des crochets solidaires de la pièce de liaison en s'étendant à partir de la face de celle-ci opposée à la boucle ouverte, l'autre extrémité de la pièce étant également repliée du côté des crochets et adaptée à venir se loger à force contre un flan d'appui du profilé, parallèle au rebord d'accrochage.

Le montage du clip de liaison ainsi proposé se réalise en deux temps, d'abord par mise en place des crochets sous le rebord du premier profilé, puis par pivotement de la pièce de liaison autour du point d'appui ainsi créé jusqu'à engagement à force de l'extrémité opposée de celle-ci contre le flan d'appui, réalisant l'immobilisation parfaite du clip par rapport au profilé. Dans un deuxième temps, le second profilé est engagé dans la boucle ouverte de la pièce de liaison dont le bord rabattu formant pince serre celui-ci, en le maintenant appliqué contre le premier, la pièce de liaison étant emprisonnée entre les deux profilés et par suite cachée à l'extérieur.

De préférence, l'extrémité de la pièce de liaison se logeant contre le flan d'appui présente une partie en creux dans laquelle vient s'engager un ergot en saillie ménagé dans le côté du flan en direction du rebord d'accrochage de manière à immobiliser la pièce de liaison par rapport au profilé.

Selon une autre caractéristique également, la boucle ouverte de la pièce de liaison recevant le second profilé présente une partie antérieure repliée vers la partie médiane plane de cette pièce en formant avec celle-ci un angle déterminé, cette partie antérieure comportant au voisinage de son extrémité libre un bec adapté à retenir un épanouissement ménagé dans un côté du second profilé s'étendant sensiblement parallèlement à la partie médiane de la pièce et forcée dans la boucle sous la partie antérieure de celle-ci.

De préférence également, les deux profilés sont ajustés pour s'appliquer bord à bord au droit du flan d'appui afin d'enfermer entre eux la pièce de liaison et à réaliser un assemblage sans solution de continuité.

D'autres caractéristiques d'un clip de liaison établi conformément à l'invention apparaîtront encore à travers la description qui suit d'un exemple de réalisation, donné à titre indicatif et non limitatif, en référence au dessin annexé sur lequel :

- La Figure 1 est une vue en perspective d'un premier profilé métallique et d'un clip de liaison selon l'invention destiné à venir s'adapter sur ce profilé.
- Les Figures 2 et 3, sont des vues en coupe transversale du profilé de la Figure 1, permettant de mieux comprendre la manière dont s'effectue le montage du clip sur ce profilé.
- La Figure 4 est une vue en perspective de l'assemblage réalisé entre le profilé muni du clip de liaison et un second profilé ou une pièce analogue du genre parclose.

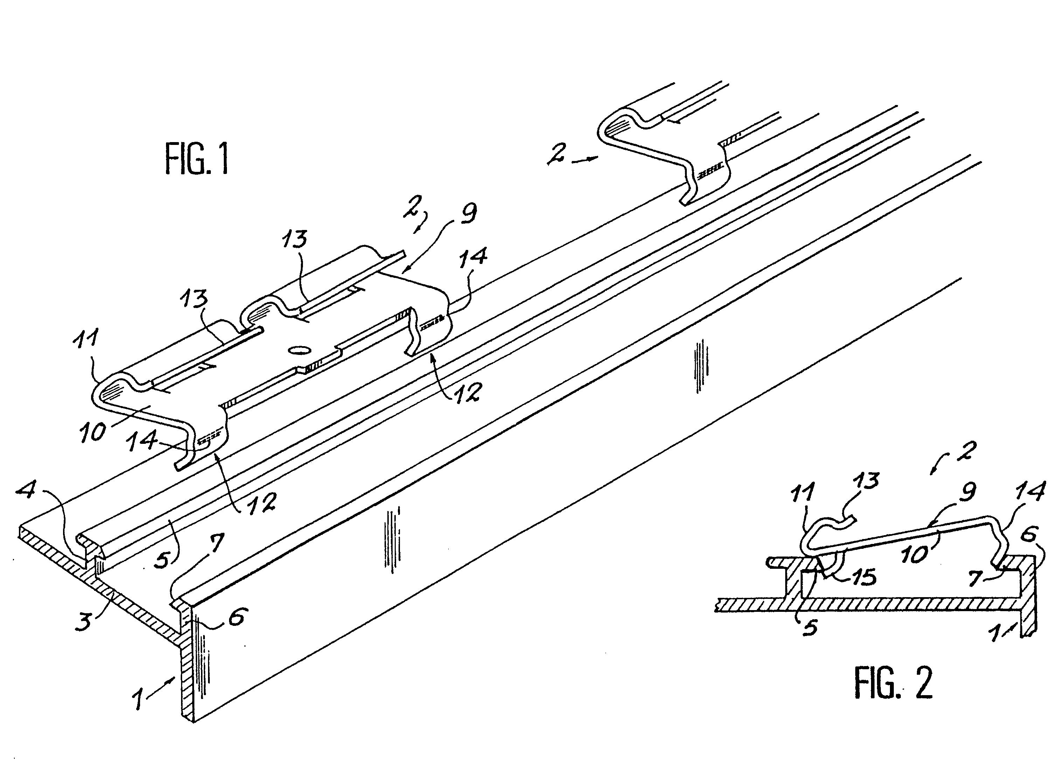

Sur la Figure 1, la référence 1 désigne un profilé d'un type général usuel dans la technique des menuiseries métalliques, notamment pour habillage de façades, réalisation de vérandas, verrières, fenêtres ou portes... La structure particulière d'un tel profilé est en elle-même indifférente pour autant qu'il comporte les moyens nécessaires au montage d'au moins un clip 2, tel que également représenté sur la Figure 1.

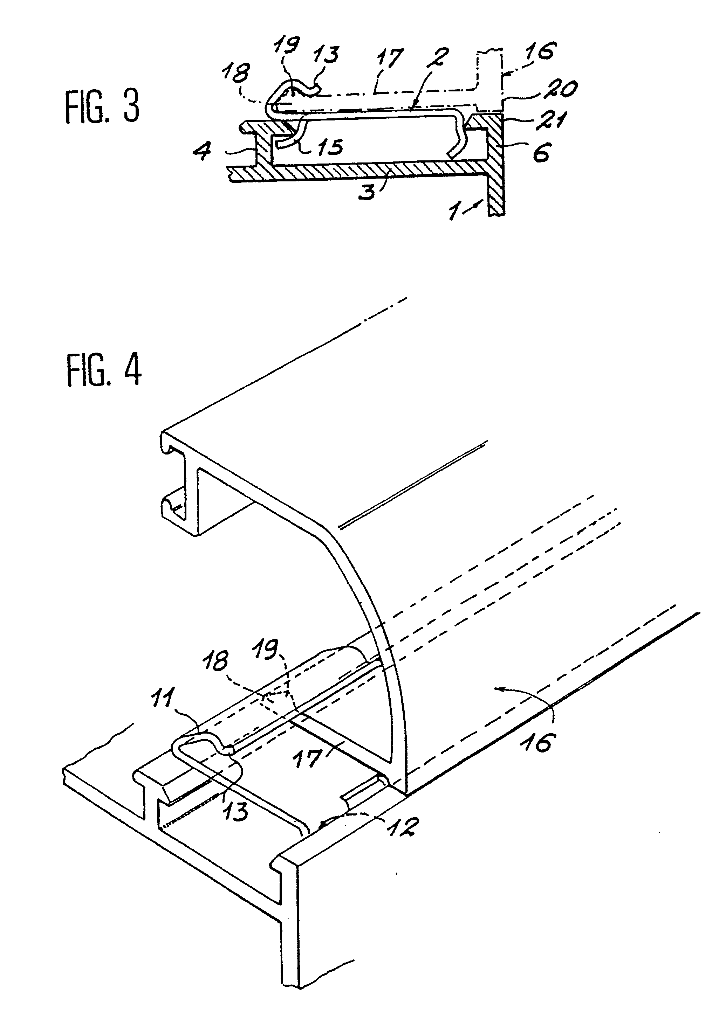

Dans ce but, le profilé 1 comporte dans une de ses faces 3 une extension 4, s'étendant perpendiculairement à celle-ci et terminée par un rebord d'accrochage 5. Dans un de ses côtés latéraux, le profilé 1 comporte également un prolongement 6 formant flan d'appui, celui-ci présentant vers l'intérieur en direction du rebord 5 un ergot en saillie 7. L'extension 4 et le flan 6 délimitent entre eux, au-dessus de la face 3 du profilé, une rainure ouverte 8 dans laquelle s'engage notamment le clip de liaison 2, la structure particulière de celui-ci et la manière de le mettre en place dans la rainure ressortant plus explicitement des Figures 2 et 3.

Sur celles-ci, on voit notamment que le clip 2 est constitué principalement par une pièce de liaison 9, présentant une partie médiane 10 sensiblement plane et deux parties d'extrémité, respectivement 11 et 12, partiellement rabattues vers la partie médiane pour donner à la pièce 9 un profil approximativement en forme de S.

La partie d'extrémité 11 forme avec la partie médiane 10 un angle approprié, en délimitant ainsi une boucle ouverte, la partie antérieure de cette boucle comportant un bec d'accrochage 13 pour l'immobilisation du second profilé à réunir au premier, comme précisé plus loin.

L'autre partie d'extrémité 12 de la pièce 9 est également rabattue par rapport à la partie médiane 10 mais dans le sens opposé à celui de l'extrémité 11, l'angle formé étant plus important et sensiblement égal à un angle droit. Cette partie d'extrémité 12 présente un creux 14 destiné à coopérer, lorsque le clip est en place sur le profilé 1, avec l'ergot 7 du flan 6.

Enfin, la pièce de liaison 9 comporte au voisinage de la partie d'extrémité 11 mais à l'opposé de celle-ci par rapport à la partie médiane 10 au moins un crochet 15, de préférence deux crochets voisins situés dans le prolongement l'un de l'autre comme on peut le voir sur la vue en perspective de la Figure 1.

Pour mettre en place le clip 2 sur le profilé 1, la pièce de liaison 9 est présentée de telle sorte que ses crochets 15 viennent s'engager sous le rebord d'appui 5 du profilé en formant un point d'ancrage autour duquel le clip peut pivoter, son extrémité 12 s'engageant alors à force contre le flan 6 dans la rainure 8 jusqu'à blocage final par coopération de l'ergot 7 dans le creux 14.

Le clip 2 étant ainsi immobilisé par simple pression vis-a-vis du profilé 1, l'ensemble peut ensuite recevoir le second profilé 16 comme le représente la Figure 4, ce second profilé constituant ici une parclose présentant à cet effet un côté rentrant 17 terminé a son extrémité libre par un épanouissement 18, adapté à s'engager lui-même à force dans la boucle ouverte élastique de la pièce 9 formée par sa partie d'extrémité 11, jusqu'à ce que le bec 13 l'immobilise en venant retomber derrière l'épanouissement 18 contre le talon 19 qu'il comporte.

Avantageusement, le côté 17 du second profilé 16 est réalisé de telle sorte qu'une fois maintenu dans le clip de la façon indiquée ci-dessus, son bord opposé 20 se situe exactement dans le prolongement du côté 21 du premier profilé, en procurant à l'ensemble réalisé avec les deux profilés, une face sensiblement continue sans jeux de montage, l'élasticité du clip permettant de maintenir étroitement les deux profilés l'un contre l'autre.

On réalise ainsi un dispositif d'assemblage de deux profilés au moyen d'un clip indépendant, de conception très simple et qui assure une parfaite application mutuelle de ces profilés l'un contre l'autre, cet assemblage une fois effectué permettant de cacher entièrement le clip en éliminant tous les jeux de montage.

Bien entendu, il va de soi que l'invention ne se limite pas à l'exemple de réalisation plus spécialement décrit et représenté ci-dessus ; elle en embrasse au contraire toutes les variantes.

## Revendications

1 - Clip de liaison pour l'assemblage de deux profilés, propre à être immobilisé par pression sur l'un de ces profilés (1) et à maintenir l'autre (16) en appui direct sur le premier, caractérisé en ce qu'il est constitué par une pièce de liaison métallique (9) en forme de S, à partie médiane (10) sensiblement plane dont l'une des extrémités (11) partiellement rabattue forme une boucle ouverte destinée à recevoir et immobiliser le second profilé, cette boucle s'appliquant sur le dessus d'un rebord d'accrochage (5) ménagé sur le premier profilé et sous lequel s'engagent des crochets (15) solidaires de la pièce de liaison en s'étendant à partir de la face de celle-ci opposée à la boucle ouverte, l'autre extrémité (12) de la pièce étant également repliée du côté des crochets et adaptée à venir se loger à force contre un flan d'appui (6) du profilé (1), parallèle au rebord d'accrochage.

2 - Clip de liaison selon la revendication 1, caractérisé en ce que la partie d'extrémité (12) de la pièce de liaison (9) se logeant contre le flan d'appui (6) présente une partie en creux (14) dans laquelle vient s'engager un ergot en saillie (7) ménagé dans le côté du flan en direction du rebord d'accrochage (5), de manière à immobiliser la pièce de liaison par rapport au profilé (1).

3 - Clip de liaison selon l'une des revendications 1 ou 2, caractérisé en ce que la boucle ouverte formée à l'extrémité (11) de la pièce de liaison (9), recevant le second profilé (16) présente une partie antérieure repliée vers la partie médiane plane (10) de la pièce en ménageant avec celle-ci un angle déterminé, cette partie antérieure comportant au voisinage de son extrémité libre un bec (13) adapté à retenir un épanouissement (18) ménagé dans un côté (17) du second profilé (16), s'étendant sensiblement parallèlement à la partie médiane (10) et forcée dans la boucle sous la partie antérieure de celle-ci.

4 - Clip de liaison selon l'une quelconque des revendications 1 à 3, caractérisé en ce que les deux profilés (1, 16) reliés par le clip sont ajustés pour s'appliquer bord à bord au droit du flan d'appui 6, afin d'enfermer entre eux la pièce de liaison 9 et à réaliser un assemblage sans solution de continuité.

FIG. 1

EP 0 431 992 A1

FIG. 2

FIG. 3

FIG. 4

# RAPPORT DE RECHERCHE EUROPEENNE

Numéro de la demande

**EP 90 40 3096**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,Y | FR-A-1 331 465  (RAPID S.A.)<br>* le document en entier * | 1,3,4,2 | F 16 B 2/24<br>F 16 B 5/06 |
| Y,A | FR-A-2 120 440  (TECHNAL INTERNATIONAL S.A.)<br>* page 1, ligne 1 - page 2, ligne 49; figures * | 2,3,4 | |
| Y | GB-A-2 187 499  (R.W. ROSE)<br>* page 1, ligne 51 - page 1, ligne 91; figures 1, 2 * | 1-3 | |
| Y | US-A-2 926 403  (SAMUEL M. WEISSMAN)<br>* le document en entier * | 1-3 | |
| A | US-A-3 278 066  (MELVIN J. GEORGE)<br>* le document en entier * | 1 | |

| | DOMAINES TECHNIQUES RECHERCHES (Int. Cl.5) |
|---|---|
| | F 16 B |

Le présent rapport de recherche a été établi pour toutes les revendications

| Lieu de la recherche | Date d'achèvement de la recherche | Examinateur |
|---|---|---|
| La Haye | 23 janvier 91 | ARESO Y SALINAS J. |